# EUROPÄISCHE PATENTANMELDUNG

(11) **EP 2 565 229 A1**
(43) Veröffentlichungstag der Anmeldung: **06.03.2013**
(21) Anmeldenummer: 11179940.9
(22) Anmeldetag: 02.09.2011
(51) Int. Cl.: C08L 13/00, C08L 23/08

(54) **Vulkanisierbare Zusammensetzungen auf Basis von Epoxygruppen-haltigen Ethylenvinylacetat-Copolymerisaten**

(71) Anmelder: LANXESS Deutschland GmbH, 51369 Leverkusen (DE)
(72) Erfinder: Die Erfindernennung liegt noch nicht vor

(57) **Zusammenfassung**

Die Erfindung betrifft vulkanisierbare Zusammensetzungen enthaltend
(a) mindestens ein Epoxygruppen-haltiges Ethylen-Vinylacetat-Copolymerisat mit einem Vinylacetatgehalt von mindestens 20 Gew.-%, bevorzugt mindestens 30 Gew.-%, besonders bevorzugt mindestens 40 Gew.-% bezogen auf das Epoxygruppen-haltige Ethylen-Vinylacetat-Copolymerisat und
(b) mindestens einen carboxylierten Nitrilkautschuk.

## Beschreibung

Die Erfindung betrifft vulkanisierbare Zusammensetzungen auf Basis von Epoxygruppen-haltigen Ethylen-Vinylacetat-Copolymerisaten, ein Verfahren zu deren Herstellung, ein Verfahren zur Herstellung von Vulkanisaten daraus, die so erhaltenen Vulkanisate und deren Verwendung.

Unter Nitrilkautschuken, abgekürzt oft auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Co- oder Terpolymere verstanden, bei denen die C=C-Doppelbindungen der einpolymerisierten Dieneinheiten ganz oder teilweise hydriert sind.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit, einer hervorragenden Beständigkeit gegen Ozon und Chemikalien, wobei letztere im Fall des HNBR noch ausgeprägter als beim NBR sind. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller Termonomere oder besondere Funktionalisierungen zunehmend nachgefragt.

Im praktischen Einsatz der (H)NBR Kautschuke kommt dabei auch der Vulkanisation der Kautschuke, d.h. insbesondere dem Vernetzersystem und den Vulkanisationsbedingungen, eine wachsende Bedeutung zu. So wurden neben den bereits seit vielen Jahrzehnten existierenden klassischen Kautschuk-Vernetzungssystemen auf Basis von Peroxiden bzw. Schwefel in den letzten Jahren diverse neue Konzepte zur alternativen Vernetzung entwickelt. Derartige Vernetzungskonzepte beziehen auch Polymere mit ein, die aufgrund funktioneller Gruppen nicht allen Vernetzungsformen und -agentien zugänglich sind und daher eine besondere Herausforderung darstellen.

In der EP-A 1 096 190 werden Blends aus Nitrilbutadienkautschuke (NBR) mit PVC zur Verbesserung der Ozonbeständigkeit von NBR beschrieben. Dabei werden diese Blends als Außenschicht von kraftstoffbeständigen Schläuchen eingesetzt, wobei NBR für eine hohe Diffusionssperre gegen Kraftstoff und PVC für eine gute Ozonbeständigkeit sorgen. Denn das PVC schirmt die im NBR vorhandenen Doppelbindungen ab, wodurch ein Angriff des Ozons auf das NBR unterdrückt wird. Die so hergestellten Blends weisen allerdings eine schlechte Tieftemperaturflexibilität bzw. eine schlechte Hitzebeständigkeit und einen relativen hohen Druckverformungsrest auf.

NBR und PVC sind Polymere, die verträglich sind, wenn der Acrylnitrilanteil des NBR >25 Gew.-% beträgt. Daraus wird auch die gute Ozonbeständigkeit abgeleitet. Da jedoch nur wenige Polymere miteinander vollständig verträglich sind, ist ein Abfall der Ozonbeständigkeit bei einem Verschnitt von NBR mit einem halogenfreien Material bei sonst ähnlichem physikalischem Eigenschaftsprofil zu erwarten. Wichtige Eigenschaften von NBR/PVC- Blends sind in Gummi, Fasern, Kunststoffe (1997) 50(2), 126 beschrieben.

In der DE-A 10213227 werden Zusammensetzungen beschrieben, die ein Ethylen-Vinylacetat-Copolymerisat enthalten, das mehr als 40 Gew.-% Vinylacetat enthält. Diese Zusammensetzungen werden zum Verkleben von Etiketten und Folien verwendet.

Des Weiteren ist aus der EP 0 374 666 B1 ein Verfahren zur Herstellung von Ethylen/Vinylester-Terpolymerisaten bekannt. Darin werden Ethyl-Vinylacetat-Glycidylmethacrylat-Copolymerisat beschrieben, das durch ein in einer Kaskade kontinuierlich durchgeführtes Lösungspolymerisationsverfahren mit definierten Parametern (Lösungsmittelgehalt, Druck, Temperaturführung, Umsatz) hergestellt wird.

Die Aufgabe der vorliegenden Erfindung bestand darin, eine vulkanisierbare Zusammensetzung bereitzustellen, die sowohl eine gute Ozonbeständigkeit als auch eine verbesserte Tieftemperatureigenschaft und Hitzebeständigkeit aufweist.

Die Aufgabe wird gelöst durch eine vulkanisierbare Zusammensetzung enthaltend
(a) mindestens ein Epoxygruppen-haltiges Ethylen-Vinylacetat-Copolymerisat mit einem Vinylacetatgehalt von mindestens 20 Gew.-%, bevorzugt mindestens 30 Gew.-%, besonders bevorzugt mindestens 40 Gew.-% bezogen auf das Epoxygruppen-haltige Ethylen-Vinylacetat-Copolymerisat und
(b) mindestens einen carboxylierten Nitrilkautschuk.

Überraschenderweise können beim erfindungsgemäßen Einsatz des zuvor genannten epoxygruppenhaltigen Ethylen-Vinylacetat-Copolymerisats (a) mit einem carboxylierten Nitrilkautschuk (b) thermisch stabile Netzwerke aufgebaut werden.

Es hat sich herausgestellt, dass die Matrix derartiger Zusammensetzungen homogen ist und daraus hergestellte Vulkanisate Ozonbeständigkeit sowie verbesserte Tieftemperatur- und Hitzebeständigkeit aufweisen.

### Epoxyhaltiges Ethylen-Vinylacetat-Copolymerisat (a)

Ethylen, Vinylacetat und epoxygruppenhaltige Monomere lassen sich bekanntlich in unterschiedlichen Mengenverhältnissen bei statistischer Verteilung der copolymerisierten Monomereinheiten radikalisch polymerisieren. Die Copolymerisation kann grundsätzlich nach folgenden drei Verfahren durchgeführt werden:
1. Emulsionspolymerisation,
2. Lösungspolymerisation und
3. Hochdruckmassepolymerisation.

Das Verfahren zur Herstellung des erfindungsgemäßen Epoxyhaltiges Ethylen-Vinylacetat-Copolymerisat erfolgt mit den in der Technik üblichen Polymerisationsverfahren, besonders bevorzugt ist das Lösungsverfahren mit Hilfe von radikalisch zerfallenden Initiatoren. Unter radikalisch zerfallenden Initiatoren sind Peroxide sowie Azoverbindungen zu verstehen. Besonders bevorzugt sind Azoverbindungen wie ADVN (Azo-di-Valeronitril). Das Verfahren zur Herstellung des erfindungsgemäßen Epoxyhaltiges Ethylen-Vinylacetat-Copolymerisats wird bei Temperaturen im Bereich von 30 bis 100°C, bevorzugt bei 40 bis 80°C und einem Druck im Bereich von 5 bis 500 bar, bevorzugt 200 bis 450 bar durchgeführt.

Die zur Herstellung der Epoxygruppen-haltigen Ethylen-Vinylacetat-Copolymerisate eingesetzten Epoxygruppen-haltigen Monomere besitzen die allgemeinen Formel (I) 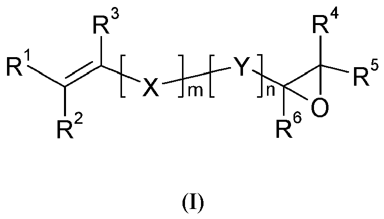 worin,
- **m**: 0 oder 1 ist und
- **X**: für O, O(CR₂)p, (CR₂)pO, C(=O)O, C(=O)O(CR₂)ₚ, C(=O)NR, (CR₂)ₚ, N(R), N(R)(CR₂)ₚ, P(R), P(R)(CR₂)ₚ, P(=O)(R), P(=O)(R)(CR₂)ₚ, S, S(CR₂)ₚ, S(=O), S(=O)(CR₂)ₚ, S(=O)₂(CR₂)ₚ oder S(=O)₂ steht, wobei R in diesen Resten die gleiche Bedeutungen besitzen kann wie R¹-R⁶
- **Y**: für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet von Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
- **n und p**: gleich oder verschieden sind und jeweils im Bereich von 0 bis 10.000 liegen,
- **R, R¹, R², R³, R⁴, R⁵ und R⁶**: gleich oder verschieden sind und für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkylthio, Arylthio, Sulfanyl, Thiocarboxy, Sulfinyl, Sulfono, Sulfino, Sulfeno, Sulfonsäuren, Sulfamoyl, Hydroxyimino, Alkoxycarbonyl, F, Cl, Br, I, Hydroxy, Phosphonato, Phosphinato, Silyl, Silyloxy, Nitril, Borate, Selenate, Carbonyl, Carboxy, Oxycarbonyl, Oxysulfonyl, Oxo, Thioxo, Epoxy, Cyanate, Thiocyanate, Isocyanate, Thioisocyanate oder Isocyanide stehen.

Optional sind die für die Reste R, R¹ bis R⁶ und die Wiederholungseinheiten Y der allgemeinen Formel (I) genannten Bedeutungen jeweils ein- oder mehrfach substituiert.

Bevorzugt weisen die folgenden Reste aus den Bedeutungen für R, R¹ bis R⁶ eine derartige ein-oder mehrfache Substitution auf: Alkyl, Carbocyclyl, Heterocyclyl, Aryl, Heteroaryl, Arylalkyl, Heteroarylalkyl, Alkoxy, Aryloxy, Alkylthio, Arylthio, Amino, Amido, Carbamoyl, F, Cl, Br, I, Hydroxy, Phosphonato, Phosphinato, Sulfanyl, Thiocarboxy, Sulfinyl, Sulfono, Sulfino, Sulfeno, Sulfamoyl, Silyl, Silyloxy, Carbonyl, Carboxy, Oxycarbonyl, Oxysulfonyl, Oxo, Thioxo, Borate, Selenate und Epoxy. Als Substituenten kommen - soweit sich chemisch stabile Verbindungen ergeben - alle Bedeutungen in Frage, die R annehmen kann. Besonders geeignet als Substituenten sind Alkyl, Carbocyclyl, Aryl, Halogen, bevorzugt Fluor, Chlor, Brom oder Iod, Nitril (CN) und Carboxy.

**Besonders bevorzugt** wird ein Epoxygruppen-haltiges Monomer der allgemeinen Formel (I) eingesetzt, worin **X, R, R¹** bis **R⁶** und **m** die zuvor für die allgemeine Formel (I) genannten Bedeutungen besitzen, **p** und n gleich oder verschieden sind und im Bereich von 0 bis 100 liegen.

Insbesondere bevorzugt besitzen **X, R, R¹** bis **R⁶** und **m** die zuvor für die allgemeine Formel (I) genannten Bedeutungen und **p** liegt im Bereich von 0 bis 100 und n ist gleich Null. Dieses Epoxygruppen-haltiges Monomer besitzt somit die **allgemeine Struktur (Ia)** 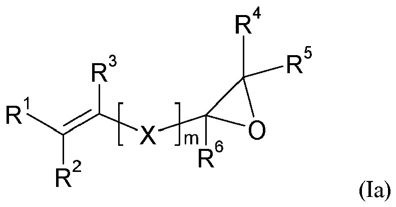 worin
**X, R, R¹ bis R⁶, m und p** die zuvor für die allgemeine Formel (I) genannten Bedeutungen besitzen.
**Inbesondere bevorzugt** wird ein Epoxygruppen-haltiges Monomer der allgemeinen Formel (I) eingesetzt, worin **X, R und R¹ bis R⁶** die zuvor für die allgemeine Formel (I) genannten Bedeutungen besitzen, **m** gleich 1 ist, **p** gleich 1 ist und **n** gleich Null ist.

Bevorzugte Beispiele Epoxygruppen-haltiger Monomere sind 2-Ethylglycidylacrylat, 2-Ethylglycidylmethacrylat, 2-(n-Propyl)glycidylacrylat, 2-(n-Propyl)glycidylmethacrylat, 2-(n-Butyl)-glycidylacrylat, 2-(n-Butyl)glycidylmethacrylat, Glycidylmethacrylat, Glycidylmethylacrylat, Glycidylmethyl-methacrylat, Glycidylacrylat, (3',4'-Epoxyheptyl)-2-ethylacrylat, (3',4'-Epoxy-heptyl)-2-ethyl-meth-acrylat, (6',7'-Epoxyheptyl)acrylat, (6',7'-Epoxyheptyl)methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinyl-benzylglycidylether, m-Vinylbenzylglycidylether, p-Vinylbenzylglycidylether und 3-Vinylcyclohexenoxid.

Als Epoxygruppen-haltiges Monomer wird vorzugsweise ein Glycidyl(alkyl)acrylat eingesetzt. Besonders bevorzugt werden Glycidylacrylat oder Glycidylmethacrylat eingesetzt.

Zur Herstellung des erfindungsgemäßen Epoxygruppen-haltigen Ethylen-Vinylacetat-Copolymerisats werden
i) 1 bis 59 Gew.-% copolymerisiertes Ethylen,
ii) 4 0 bis 99 Gew.-% copolymerisierte Vinylacetat und
iii) 1 bis 20 Gew.-% copolymerisierte Epoxygruppen-haltiges Monomer der Formel (I) oder (Ia),
wobei sich die Prozentangaben jeweils auf die Summe der Komponenten (i + ii + iii) beziehen, in Lösung, dadurch gekennzeichnet, dass man die Reaktion
- in einem polaren organischen Lösungsmittel bei einer Lösungsmittelkonzentration, bezogen auf die Summe (Monomere + Lösungsmittel), von über 20 bis 75 Gew.-%,
- unter Drucken von 100 bis 1.000 bar,
- bei Temperaturen von 30 bis 150°C, vorzugsweise von 50 bis 110°C,
- in Gegenwart von 0,01 bis 1,5 Gew.-%, bezogen auf eingesetzte Monomere, Polymerisationsinitiator,
- bis zu einem Umsatz, bezogen auf Vinylacetat ii), von 20 bis 90 Gew.-%, vorzugsweise 30 bis 80 Gew.-% durchführt, wobei iii) in einer Lösung aus ii) und dem Lösungsmittel während der Polymerisation zudosiert wird.

Vorzugsweise wird das iii) als 5-60 Gew.-%ige, vorzugsweise 10 -50 Gew.-%ige Epoxygruppen-haltige Monomer-Lösung bezogen auf das Vinylacetat und das Lösungsmittel für die Zudosierung eingesetzt.

Bevorzugt erfolgt die Zudosierung kontinuierlich.

Die Anteile der Monomere müssen sich jeweils zu 100 Gew.-% aufsummieren.

Polare organische Lösungsmittel sind Lösungsmittel, die zu mindestens 50 Gew.-% aus tert.-Butanol bestehen. Bevorzugtes Lösungsmittel ist tert. Butanol selbst.

Es ist ebenso vorstellbar, sämtliche oder einzelne Komponenten des Initiatorsystems zu Beginn der Polymerisation und/oder während der Polymerisation zuzudosieren. Die portionsweise Zugabe sämtlicher sowie einzelner Komponenten während der Polymerisation ist bevorzugt. Durch eine sequentielle Zugabe lässt sich die Reaktionsgeschwindigkeit steuern. Zur Erzielung eines gleichmäßigen Polymerisationsverlaufs kann für den Start der Polymerisation nur ein Teil des Initiatorsystems verwendet und der Rest während der Polymerisation nachdosiert werden.

Alternativ kann auch das epoxygruppen-haltige Ethylen-Vinylacetat-Copolymerisat hergestellt nach dem Verfahren aus EP 0 374 666 B1 eingesetzt werden.

Vorzugsweise beträgt der Anteil an Epoxy-Monomeren von kleiner als 20 Gew.-%, bevorzugt kleiner als 15 Gew.-% besonders bevorzugt kleiner als 10 Gew.-% bezogen auf das Ethylen-Vinylacetat-Copolymerisat.

### Carboxylierter Nitrilkautschuk (b)

Als carboxylierter Nitrilkautschuk können in den erfindungsgemäßen vulkanisierbaren Zusammensetzungen beliebige geeignete carboxylierter Nitrilkautschuke eingesetzt werden, die Wiederholungseinheiten abgeleitet von mindestens einem konjugierten Dien, mindestens einem α,β-ungesättigten Nitril und einem oder mehreren weiteren copolymerisierbaren Carboxylgruppenhaltigen Monomer.

Das **konjugierte Dien** im carboxylierten Nitrilkautschuk kann von jeder Natur sein. Bevorzugt werden (C₄-C₆) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Als weitere copolymerisierbare Monomere können - falls gewünscht - beispielsweise **aromatische Vinylmonomere,** bevorzugt Styrol, α-Methylstyrol und Vinylpyridin, **fluorhaltige Vinylmonomere,** bevorzugt Fluorethylvinylether, Fluorpropylvinylether, o-Fluormethylstyrol, Vinylpentafluorbenzoat, Difluoroethylen und Tetrafluoroethylen, oder auch **copolymerisierbare Antiageing Monomere,** bevorzugt N-(4-anilinophenyl) acrylamid, N-(4-anilinophenyl) methacrylamid, N-(4-anilinphenyl) cinnamide, N-(4-anilinophenyl) crotonamid, N-phenyl-4-(3-vinylbenzyloxy) anilin und N-phenyl-4-(4-vinylbenzyloxy) anilin eingesetzt werden sowie **nicht-konjugierte Diene,** wie 4-Cyanocyclohexen und 4-Vinylcyclohexen, oder auch **Alkine,** wie 1-oder 2-Butin.

Alternativ können als weitere copolymerisierbare Monomere carboxygruppenhaltige, copolymerisierbare Termonomere eingesetzt werden, beispielsweise α,β-ungesättigte Monocarbonsäuren, deren Ester, α,β-ungesättigte Dicarbonsäuren, deren Mono- oder -Diester oder deren entsprechenden Anhydride oder Amide.

Die eingesetzten Wiederholungseinheiten eines Carboxylgruppenhaltigen Monomers des carboxylierten Nitrilkautschuks besitzen die allgemeinen Formel **(II)** 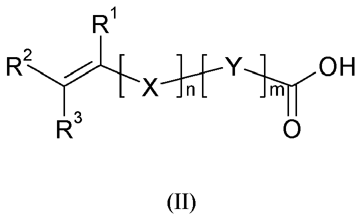 worin R¹, R², R³, gleich oder verschieden sind und für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkylthio, Arylthio, Sulfanyl, Thiocarboxy, Sulfinyl, Sulfono, Sulfino, Sulfeno, Sulfonsäuren, Sulfamoyl, Hydroxyimino, Alkoxycarbonyl, F, Cl, Br, I, Hydroxy, Phosphonato, Phosphinato, Silyl, Silyloxy, Nitril, Borate, Selenate, Carbonyl, Carboxy, Oxycarbonyl, Oxysulfonyl, Oxo, Thioxo, Epoxy, Cyanate, Thiocyanate, Isocyanate, Thioisocyanate , Isocyanide oder Carboxylgruppen stehen.
- n: 0 oder 1 ist und
- **X**: für O, O(CR₂)ₚ, (CR₂)ₚO, C(=O)O, C(=O)O(CR₂)ₚ, C(=O)NR, (CR₂)ₚ, N(R), N(R)(CR₂)ₚ, P(R), P(R)(CR₂)ₚ, P(=O)(R), P(=O)(R)(CR₂)ₚ, S, S(CR₂)ₚ, S(=O), S(=O)(CR₂)ₚ, S(=O)₂(CR₂)ₚ oder S(=O)₂ steht, wobei R in diesen Resten die gleiche Bedeutungen besitzen kann wie R1-R3 und P Werte zwischen 1 und 1000 annehmen kann.
- **m**: 0 oder 1 ist und
- **Y**: gleich oder verschieden sind und für einen linearen oder verzweigten, gesättigten, einoder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, oder Alkoxyarylrest stehen.

Die Menge an Carbonsäure-Monomer, das in dem Nitrilkautschuk polymerisiert ist, beträgt im Allgemeinen 1 bis 20 Gewichtsteile und vorzugsweise 2 bis 10 Gewichtsteile, bezogen auf 100 Gewichtsteile des Nitrilkautschuks, der sich von Acrylnitril und den konjugierten Dien-Monomeren ableitet.

### Metathese und Hydrierung:

Es ist auch möglich, dass sich an die Herstellung des carboylierten Nitrilkautschuks (1) eine Metathese-Reaktion zur Reduktion des Molekulargewichts des Nitrilkautschuks oder (2) eine Metathese-Reaktion und eine nachfolgende Hydrierung oder (3) nur eine Hydrierung anschließt. Diese Metathese- bzw. Hydrierungsreaktionen sind bei dem Fachmann hinlänglich bekannt und in der Literatur beschrieben. Die Metathese ist beispielsweise aus WO-A-02/100941 sowie der WO-A-02/100905 bekannt und kann zum Molekulargewichtsabbau eingesetzt werden.

Die Hydrierung kann unter Einsatz homogener oder heterogener Hydrierkatalysatoren durchgeführt werden. Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**).**

Geeignete Katalysatoren und Lösungsmittel für eine Hydrierung in homogener Phase werden im Folgenden beschrieben und sind auch aus DE-A-25 39 132 und der EP-A-0 471 250 bekannt. Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

(R¹ₘB)₁ M Xₙ.

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45, bezogen auf 100 Gewichtsteile des zu hydrierenden Nitrilkautschuks werden vorzugsweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung der Hydrierung ist dem Fachmann aus US-A-6,683,136 bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden. Die Bestimmung des Hydriergrads ist dem Fachmann wohl bekannt und kann beispielsweise durch Raman- oder IR-Spektroskopie erfolgen (siehe z.B. EPA-0 897 933 für die Bestimmung durch Raman-Spektroskopie oder US-A-6,522,408 für die Bestimmung über IR-Spektroskopie).

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Die erfindungsgemäßen epoxygruppen-haltigen Ethylen-Vinylacetat-Copolymerisate besitzen üblicherweise **Mooney-Viskositäten** (ML (1+4 @100°C)) im Bereich von 5 bis 120, bevorzugt von 10 bis 100 Mooney-Einheiten, besonders bevorzugt von 15 bis 80 Mooney-Einheiten. Die Bestimmung der Werte für die Mooney-Viskosität (ML 1+4 @100°C) erfolgt mittels eines Scherscheibenviskosimeters nach DIN 53523/3 bzw. ASTM D 1646 bei 100°C.

Die epoxygruppen-haltigen Ethylen-Vinylacetat-Copolymerisate besitzen typischerweise ferner eine **Polydispersität** PDI = M_{w}/Mₙ, wobei M_{w} das Gewichtsmittel und Mₙ das Zahlenmittel des Molekulargewichts darstellt, im Bereich von 1,0 bis 6,0 und bevorzugt im Bereich von 1,5 bis 5,0.

Die Glastemperaturen der epoxygruppen-haltige Ethylen-Vinylacetat-Copolymerisate liegen im Bereich von -80°C bis +20°C, vorzugsweise im Bereich von -70°C bis +15°C und besonders bevorzugt im Bereich von -40°C bis 10°C.

Vorzugsweise weist die erfindungsgemäße vulkanisierbare Zusammensetzung ein Verhältnis von (a) : (b) von 1 : 3 bis 3 : 1, bevorzugt 1 : 1, auf.

In einer bevorzugten Ausführungsform enthält die erfindungsgemäße vulkanisierbare Zusammensetzung
(a) mindestens ein Epoxygruppen-haltiges Ethylen-Vinylacetat-Copolymerisat mit einem Vinylacetatgehalt von mindestens 20 Gew.-%, bevorzugt mindestens 30 Gew.-%, besonders bevorzugt mindestens 40 Gew.-% bezogen auf das Epoxygruppen-haltige Ethylen-Vinylacetat-Copolymerisat, das Wiederholungseinheiten abgeleitet von mindestens einem Ethylen, einem Vinylester, mindestens einem Epoxygruppen-haltigen Monomer aus gewählt aus der Gruppe bestehend aus 2-Ethylglycidylacrylat, 2-Ethylglycidylmethacrylat, 2-(n-Propyl)glycidylacrylat, 2-(n-Propyl)glycidylmethacrylat, 2-(n-Butyl)glycidylacrylat, 2-(n-Butyl)glycidylmethacrylat, Glycidylmethacrylat, Glycidylmethylacrylat, Glycidylmethyl-methacrylat, Glycidylacrylat, (3',4'-Epoxyheptyl)-2-ethylacrylat, (3',4'-Epoxyheptyl)-2-ethyl-meth-acrylat, (6',7'-Epoxyheptyl)acrylat, (6',7'-Epoxyheptyl)methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinyl-benzylglycidylether, m-Vinylbenzylglycidylether, p-Vinylbenzylglycidylether und 3-Vinylcyclohexenoxid und
(b) mindestens einen carboxylierten Nitrilkautschuk.

In einer bevorzugten erfindungsgemäßen Ausführungsform handelt es sich um vulkanisierbare Zusammensetzungen, die (c) zusätzlich mindestens einen Füllstoff enthalten. Eingesetzt werden können z.B. Ruß, Kieselsäure, Kohlenstoff Nanotubes, Teflon (letzteres bevorzugt in Pulverform) oder Silikate.

In weiteren Ausführungsformen können die erfindungsgemäßen vulkanisierbare Zusammensetzungen auch noch ein oder mehrere dem Kautschukfachmann geläufige Additive enthalten. Diese Additive umfassen Füllstoffaktivatoren, Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, Vulkanisationsverzögerer, sowie weitere oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Füllstoffaktivatoren** kommen z.B. organische Silane, bevorzugt Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyl-dimethoxysilan in Betracht. Weitere Füllstoffaktivatoren stellen zum Beispiel grenzflächenaktive Substanzen wie Triethanolamin, Trimethylolpropan, Hexantriol und Polyethylenglycole mit Molekulargewichten von 74 bis 10 000 g/mol dar. Die Menge an Füllstoffaktivatoren beträgt üblicherweise 0 bis 10 Gew.-Teile, bezogen auf 100 Gew.-Teile des Epoxidgruppen-haltigen Ethylen-Vinylacetat-Copolymerisats.

Als **Alterungsschutzmittel** können den vulkanisierbaren Zusammensetzungen alle dem Fachmann bekannten zugesetzt werden, die üblicherweise in Mengen von 0 bis 5 Gew.-Teile, bevorzugt 0,5 bis 3 Gew.-Teile, bezogen auf 100 Gew.-Teile des epoxidgruppen-haltigen Ethylen-Vinylacetat-Copolymerisats eingesetzt werden.

Als **Formtrennmittel** kommen z.B. gesättigte oder teilweise ungesättigte Fett- und Ölsäuren und deren Derivate (Fettsäureester, Fettsäuresalze, Fettalkohole, Fettsäureamide) in Betracht. Weiterhin können auf die Formoberfläche applizierbare Produkte, wie z.B. Produkte auf Basis von niedermolekularen Silikonverbindungen, Produkte auf Basis von Fluorpolymeren sowie Produkte auf Basis von Phenolharzen eingesetzt werden. Die Formtrennmittel werden in Mengen von 0 bis 10 Gew.-Teile, bevorzugt 0,5 bis 5 Gew.-Teile, bezogen auf 100 Gew.-Teile des epoxidgruppen-haltigen Ethylen-Vinylacetat-Copolymerisats eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der Erfindung** ist ferner das Verfahren zur Herstellung der vulkanisierbaren Zusammensetzungen durch Mischen mindestens eines Epoxygruppen-haltigen Ethylen-Vinylacetat-Copolymerisats (a) mit mindestens einem carboxylierten Nitrilkautschuk (b).

Dieser Mischvorgang kann in allen dem Fachmann geläufigen Mischapparaturen erfolgen. Sofern ein oder mehrere Füllstoffe sowie ein oder mehrere weitere Kautschukadditive verwendet werden, können auch diese in beliebiger Reihenfolge eingemischt werden.

**Gegenstand der Erfindung** ist weiterhin ein Verfahren zur Herstellung von Vulkanisaten auf Basis von Epoxygruppen-haltigen Ethylen-vinylacetat-Copolymerisaten, wobei die erfindungsgemäße vulkanisierbare Zusammensetzung unter Erhöhung der Temperatur im Bereich von 20 bis 250°C, bevorzugt im Bereich von 50 bis 230°C, besonders bevorzugt 100°C bis 210°C vernetzt wird. Die Dauer der Vernetzungsreaktion liegt im Bereich von einer (1) Minute bis mehrere Tage, bevorzugt 5 Minuten bis 120 Minuten. Die Vulkanisationsdauer richtet sich nach dem gewünschten Vulkanisationsprodukt.

**Gegenstand der Erfindung** sind auch die so erhältlichen Vulkanisate. Diese zeigen sehr gute Werte im Druckverformungstest bei Raumtemperatur, 100°C und 150°C und des weiteren eine hohe Zugspannung bis 400 % bei guten Bruchdehnungen bis 25 MPa.

### Beispiele:

Der Stickstoffgehalt zur Bestimmung des **Acrylnitrilgehalts** ("ACN-Gehalt") wird in den erfindungsgemäßen Epoxygruppen-haltigen, optional ganz oder teilweise hydrierten Nitrilkautschuken gemäß DIN 53 625 nach Kjeldahl bestimmt. Aufgrund des Gehalts an polaren Comonomeren sind die Epoxygruppen-haltigen, optional hydrierten Nitrilkautschuke üblicherweise in Methylethylketon bei 20°C > 85 Gew. % löslich.

Die Bestimmung der **Glasübergangstemperatur,** sowie deren sogenannte Onset- und Offsetpunkte erfolgt mittels dynamischer Differenzkalorimetrie (engl.: *Differential Scanning Calorimetry -* DSC) nach ASTM E 1356-03 bzw. nach DIN 11357-2.

Die Bestimmung **des Termonomergehaltes** der einzelnen Polymere erfolgte mittels 1H NMR (Gerät: Bruker DPX400 mit Software XWIN-NMR 3.1, Messfrequenz 400 MHz).

Die Bestimmung der Werte für die **Mooney-Viskosität** (ML 1+4@100°C) erfolgt jeweils mittels eines Scherscheibenviskosimeters nach DIN 53523/3 bzw. ASTM D 1646 bei 100°C.

Der **Vulkanisationsverlauf** im MDR und dessen analytischen Daten wurden an einem Monsanto-Rheometer MDR 2000 nach ASTM D5289-95 gemessen.

Der **Druckverformungsrest** ("DVR") (engl.: *Compression Set*) bei der angegebenen Temperatur wurde nach DIN 53517 gemessen.

Die **Härte nach Shore A** wurde nach ASTM-D2240-81 gemessen.

Die **Zugversuche** zur Bestimmung der Spannung in Abhängigkeit von der Deformation wurden nach DIN 53504 bzw. ASTM D412-80 durchgeführt.

Die in den nachfolgenden Tabellen angegebenen Abkürzungen haben folgende Bedeutungen:
- "RT": Raumtemperatur (23 ± 2 °C)
- "TS": Tensile strength (engl.), Zugspannung, gemessen bei RT
- "EB": Elongation at break (engl.), Bruchdehnung, gemessen bei RT
- "M50": Modul bei 50% Dehnung, gemessen bei RT
- "M100": Modul bei 100% Dehnung, gemessen bei RT
- "M300": Modul bei 300% Dehnung, gemessen bei RT
- "S max": ist das maximale Drehmoment der Vernetzungsisotherme
- "t₁₀": ist die Zeit, wenn 10 % von S max erreicht werden
- "t₉₅": ist die Zeit, wenn 95% von S max erreicht werden

### Folgende Substanzen wurden in den Beispielen eingesetzt:

Die nachfolgenden Chemikalien wurden als Handelsprodukte der jeweils angegebenen Firmen bezogen oder stammen aus Produktionsanlagen der angegebenen Firmen.
- Corax^{®} N550/30: Ruß (Handelsprodukt der Evonik Degussa)
- Ethylen: Handelsprodukt der Air Liquide Deutschland GmbH
- Vinylacetat: Handelsprodukt der Sigma-Aldrich Chemie GmbH
- Glycidylmethacrylat: Handelsprodukt der Sigma-Aldrich Chemie GmbH
- Krynac X 750 Grade: carboxylierter Nitrilkautschuk mit 7 % Carboxylgruppen, 27% ACN, 47 MU (Handelsprodukt der Fa. LANXESS Emulsion Rubber, La Wantzenau, France)
- tert. Butanol: Handelsprodukt der Sigma-Aldrich Chemie GmbH
- 2,2'-Azobis(2,4-dimethylvaleronitril (ADVN): Handelsprodukt der Du Pont de Nemours

### I Herstellung des erfindungsgemäßen epoxyhaltigen Ethylen-Vinylacetat-Copolymerisats

Die Herstellung des epoxyhaltigen Ethylen-Vinylacetat-Copolymerisats erfolgte in einem 5 L Rührautoklaven. Hierzu wurden 2030 g einer Lösung bestehend aus 709.0 g t-Butanol, 1317.0 g Vinylacetat, 4.0 g Glycidylmethacrylat und 252.5 g einer Aktivatorlösung bestehend aus 2.50 g ADVN und 250.0 g Vinylacetat-*t*-Butanol Lösung (Vinylacetat 20%) nacheinander bei RT in den 5 L Reaktor eingezogen. Der Reaktor wurde mit Stickstoff beaufschlagt und anschließend wurden 1083 g Ethylen aufgedrückt. Die Temperatur wurde auf 61 °C erhöht, wobei sich ein Druck von ca. 380 bar einstellt. Nach einer halben Stunde wurde eine Lösung bestehend aus 122.2 g t-Butanol, 107.8 g Vinylacetat und 76.0 g Glycidylmethacrylat mit einer Geschwindigkeit 0.6 g/min zur Reaktionsmischung dosiert. Während der ganzen Reaktion wird der Druck bei ca. 380 bar durch Aufdrücken von Ethylen gehalten.

Nach einer Reaktionszeit von 10 h wurde die Lösung entspannt und anschließend das Lösungsmittel entfernt.

Das so hergestellte Glycidylmethacrylat-Ethylen-Vinylacetat- Copolymerisat hat folgende Zusammensetzung:
38.0 Gew.-% Ethylen
55.3 Gew.-% Vinylacetat
6.7 Gew.-% Glycidylmethacrylat

Die Mooneyviskosität (ML1+4/100 °C) beträgt 16.4 Mu. Die Glasübergangstemperatur beträgt -21°C.

### II Herstellung von Vulkanisaten des Glycidylmethacrylat-Ethylen-Vinylacetat-Copolymerisats aus I mit einem carboxylierten Nitrilkautschuk

Aus dem Glycidylmethacrylat-Ethylen-Vinylacetat- Copolymerisat (a) und einem carboxylierten Nitrilkautschuk (b) wurde wie nachstehend beschrieben Blends hergestellt, die vulkanisiert wurden. Die Bestandteile der vulkanisierbaren Mischungen beziehen sich auf 100 Teile Kautschuk.

Die Mischungen wurden auf der Walze hergestellt. Hierzu wurden die beiden der Kautschuk (a) und (b) mit Ruß auf der Walze für 15 Minuten gemischt. Die Temperatur überstieg dabei nicht 120°C. Als carboxylierter Nitrilkautschuk wurde ein handelsüblicher Krynac® X 750 Grade der Fa. LANXESS Emulsion Rubber, La Wantzenau, France, verwendet.

**Tabelle 1: Zusammensetzung der vulkanisierbaren Mischung für Vulkanisate**

| **vulkanisierbare Mischung** | | **V1** |
|---|---|---|
| **Glycidylmethacrylat-Ethylen-Vinylacetat- Copolymerisat (a)** | | **50 phr** |
| **Krynac X 750 (carboxylierter Nitrilkautschuk (b))** | | **50 phr** |
| **CORAX^{®} N 550/30 (Ruß)** | | **50 phr** |
| **Total** | **phr** | **150** |
| **Dichte** | **g/ccm** | **1.212** |

Das erhaltene Vulkanisat hatte die in den Tabellen 2 bis 4 angegebenen Eigenschaften:

**Tabelle 2: Vulkanisat V1; Vulkanisationsverlauf im MDR (190°C/30 Minuten)**

| **Vulkanisat** | **V1** |
|---|---|
| **S max (dNm)** | **22.24** |
| **t₁₀ (min)** | **1.5** |
| **t₉₅ (min)** | **24.5** |

**Tabelle 3: Vulkanisate V1, Eigenschaften**

| **Vulkanisat** | | | **V1** |
|---|---|---|---|
| **Vernetzungstemperatur** | **°C** | **190** | |
| | | | |
| **TS** | **MPa** | | **18.5** |
| **EB** | **%** | | **320** |
| **M50** | **MPa** | | **2.5** |
| **M100** | **MPa** | | **6.0** |
| **M300** | **MPa** | | **17.9** |
| **Härte** | **Shore A** | | **69** |

**Tabelle 4: Vulkanisat V1, Druckverformungsrest bei 150°C**

| **Vulkanisat** | **DVR 22h** | **DVR 70h** |
|---|---|---|
| **Temperatur : 100°C** | **14%** | **21%** |
| **Temperatur: 150 °C** | **36%** | **51%** |

## Patentansprüche

1. Vulkanisierbare Zusammensetzung enthaltend
(a) mindestens ein Epoxygruppen-haltiges Ethylen-Vinylacetat-Copolymerisat mit einem Vinylacetatgehalt von mindestens 20 Gew.-%, bevorzugt mindestens 30 Gew.-%, besonders bevorzugt mindestens 40 Gew.-% bezogen auf das Epoxygruppen-haltige Ethylen-Vinylacetat-Copolymerisat und
(b) mindestens einen carboxylierten Nitrilkautschuk.

2. Vulkanisierbare Zusammensetzung nach Anspruch 1, **dadurch gekennzeichnet, dass** das Epoxidgruppen-haltige Ethylen-Vinylacetat-Copolymerisat (a) Wiederholungseinheiten eines Epoxygruppen-haltigen Monomere der allgemeinen Formel (I) aufweist 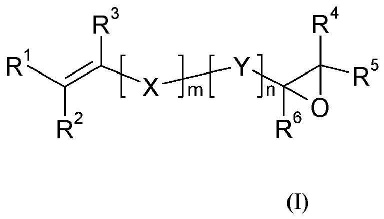 worin,
**m** 0 oder 1 ist und
**X** für O, O(CR₂)ₚ, (CR₂)ₚO, C(=O)O, C(=O)O(CR₂)ₚ, C(=O)NR, (CR₂)ₚ, N(R), N(R)(CR₂)ₚ, P(R), P(R)(CR₂)ₚ, P(=O)(R), P(=O)(R)(CR₂)ₚ, S, S(CR₂)ₚ, S(=O), S(=O)(CR₂)ₚ, S(=O)₂(CR₂)ₚ oder S(=O)₂ steht, wobei R in diesen Resten die gleiche Bedeutungen besitzen kann wie R₁-R₆.
**Y** für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet von Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
**n und p gleich oder verschieden** sind und jeweils im Bereich von 0 bis 10.000 liegen,
**R, R¹, R², R³, R⁴, R⁵ und R⁶** gleich oder verschieden sind und für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkylthio, Arylthio, Sulfanyl, Thiocarboxy, Sulfinyl, Sulfono, Sulfino, Sulfeno, Sulfonsäuren, Sulfamoyl, Hydroxyimino, Alkoxycarbonyl, F, Cl, Br, I, Hydroxy, Phosphonato, Phosphinato, Silyl, Silyloxy, Nitril, Borate, Selenate, Carbonyl, Carboxy, Oxycarbonyl, Oxysulfonyl, Oxo, Thioxo, Epoxy, Cyanate, Thiocyanate, Isocyanate, Thioisocyanate oder Isocyanide stehen.

3. Vulkanisierbare Zusammensetzung nach Anspruch 2, **dadurch gekennzeichnet, dass** das Epoxidgruppen-haltige Ethylen-Vinylacetat-Copolymerisat (a) Wiederholungseinheiten eines Epoxygruppen-haltigen Monomers enthält ausgewählt aus der Gruppe 2-Ethylglycidylacrylat, 2-Ethylglycidylmethacrylat, 2-(n-Propyl)glycidylacrylat, 2-(n-Propyl)glycidylmethacrylat, 2-(n-Butyl)glycidylacrylat, 2-(n-Butyl)glycidylmethacrylat, Glycidylmethacrylat, Glycidylmethylacrylat, Glycidylmethyl-methacrylat, Glycidylacrylat, (3',4'-Epoxyheptyl)-2-ethylacrylat, (3',4'-Epoxyheptyl)-2-ethyl-meth-acrylat, (6',7'-Epoxy-heptyl)acrylat, (6',7'-Epoxyheptyl)methacrylat, Allylglycidylether, Allyl-3,4-epoxyheptyl-ether, 6,7-Epoxyheptylallylether, Vinylglycidylether, Vinyl-3,4-epoxyheptylether, 3,4-Epoxyheptylvinylether, 6,7-Epoxyheptylvinylether, o-Vinyl-benzylglycidylether, m-Vinyl-benzylglycidylether, p-Vinylbenzylglycidylether und 3-Vinylcyclohexenoxid.

4. Vulkanisierbare Zusammensetzung nach Anspruch 3, **dadurch gekennzeichnet, dass** der Anteil an Epoxy-Monomeren von kleiner als 20 Gew.-%, bevorzugt kleiner als 15 Gew.-% besonders bevorzugt kleiner als 10 Gew.-% bezogen auf das Ethylen-Vinylacetat-Copolymerisat aufweist.

5. Vulkanisierbare Zusammensetzung nach Anspruch 4, **dadurch gekennzeichnet, dass** der carboxylierte Nitrilkautschuk der Wiederholungseinheiten abgeleitet von mindestens einem konjugierten Dien, mindestens einem α,β-ungesättigten Nitril und einem oder mehreren carboxylgruppenhaltigen Monomer aufweist.

6. Vulkanisierbare Zusammensetzung nach Anspruch 5, **dadurch gekennzeichnet, dass** der carboxylierte Nitrilkautschuk Wiederholungseinheiten eines Carboxylgruppenhaltigen Monomers der allgemeinen Formel (II) aufweist 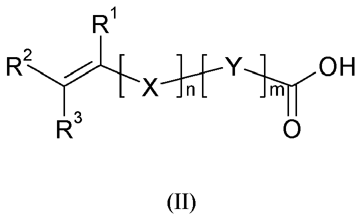 worin
R¹, R², R³, gleich oder verschieden sind und für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkylthio, Arylthio, Sulfanyl, Thiocarboxy, Sulfinyl, Sulfono, Sulfino, Sulfeno, Sulfonsäuren, Sulfamoyl, Hydroxyimino, Alkoxycarbonyl, F, Cl, Br, I, Hydroxy, Phosphonato, Phosphinato, Silyl, Silyloxy, Nitril, Borate, Selenate, Carbonyl, Carboxy, Oxycarbonyl, Oxysulfonyl, Oxo, Thioxo, Epoxy, Cyanate, Thiocyanate, Isocyanate, Thioisocyanate , Isocyanide oder Carboxylgruppen stehen.
**n** 0 oder 1 ist und
**X** für O, O(CR₂)ₚ, (CR₂)ₚO, C(=O)O, C(=O)O(CR₂)ₚ, C(=O)NR, (CR₂)ₚ, N(R), N(R)(CR₂)ₚ, P(R), P(R)(CR₂)ₚ, P(=O)(R), P(=O)(R)(CR₂)ₚ, S, S(CR₂)ₚ, S(=O), S(=O)(CR₂)ₚ, S(=O)₂(CR₂)ₚ oder S(=O)₂ steht, wobei R in diesen Resten die gleiche Bedeutungen besitzen kann wie R¹-R³ und P Werte zwischen 1 und 1000 annehmen kann.
**m** 0 oder 1 ist und
**Y** gleich oder verschieden sind und für einen linearen oder verzweigten, gesättigten, einoder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, oder Alkoxyarylrest stehen.

7. Vulkanisierbare Zusammensetzung nach Anspruch 6, **dadurch gekennzeichnet, dass** die Menge an Caboxylgruppen-haltigen Monomeren 1 - 20 Gewichtsteilen, vorzugsweise 2 - 10 Gewichtsteilen, bezogen auf 100 Gewichtsteile des Nitrilskautschuks, der sich von Acrylnitril und den konjugierten Dien-Monomeren ableitet, aufweisen.

8. Vulkanisierbare Zusammensetzung nach Anspruch 7, **dadurch gekennzeichnet, dass** der carboxylierte Nitrilkautschuk ganz oder teilweise hydriert ist.

9. Vulkanisierbare Zusammensetzung nach Anspruch 7 oder 8, **dadurch gekennzeichnet, dass** das Verhältnis von (a) zu (b) von 1 : 3 bis 3 : 1, bevorzugt 1 : 1 beträgt.

10. Vulkanisierbare Zusammensetzung nach einem oder mehreren der Ansprüche 1 bis 9, enthaltend
(a) mindestens ein Epoxygruppen-haltiges Ethylen-Vinylacetat-Copolymerisat mit einem Vinylacetatgehalt von mindestens 20 Gew.-%, bevorzugt mindestens 30 Gew.-%, besonders bevorzugt mindestens 40 Gew.-% bezogen auf das Epoxygruppen-haltige Ethylen-Vinylacetat-Copolymerisat, das Wiederholungseinheiten abgeleitet von mindestens einem Ethylen, einem Vinylester, mindestens einem Epoxygruppen-haltigen Monomer aus gewählt aus der Gruppe bestehend aus 2-Ethylglycidylacrylat, 2-Ethylglycidylmethacrylat, 2-(n-Propyl)glycidylacrylat, 2-(n-Propyl)glycidylmethacrylat, 2-(n-Butyl)glycidylacrylat, 2-(n-Butyl)glycidylmethacrylat, Glycidylmethacrylat, Glycidylmethylacrylat, Glycidylmethyl-methacrylat, Glycidylacrylat, (3',4'-Epoxyheptyl)-2-ethylacrylat, (3',4'-Epoxyheptyl)-2-ethyl-meth-acrylat, (6',7'-Epoxyheptyl)acrylat, (6',7'-Epoxyheptyl)methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinyl-benzylglycidylether, m-Vinylbenzylglycidylether, p-Vinylbenzylglycidylether und 3-Vinylcyclohexenoxid und
(b) mindestens einen carboxylierten Nitrilkautschuk.

11. Verfahren zur Herstellung einer vulkanisierten Zusammensetzung nach einem oder mehreren der Ansprüche 1 bis 9 durch Mischen mindestens eines Epoxygruppen-haltigen Ethylen-Vinylacetat-Copolymerisats (a) mit mindestens einem carboxylierten Nitrilkautschuk (b).

12. Verfahren zur Herstellung von Vulkanisaten auf Basis von Epoxygruppen-haltigen Ethylen-vinylacetat-Copolymerisaten, **dadurch gekennzeichnet, dass** die vulkanisierbare Zusammensetzung nach einem oder mehreren der Ansprüche 1 bis 10 unter Erhöhung der Temperatur im Bereich von 20 bis 250°C, bevorzugt im Bereich von 50 bis 230°C, besonders bevorzugt 100°C bis 210°C vernetzt wird.

13. Vulkanisate erhältlich durch das Verfahren nach Anspruch 12.
